# EUROPÄISCHE PATENTANMELDUNG

(11) **EP 0 974 777 A2**
(43) Veröffentlichungstag der Anmeldung: **26.01.2000**
(21) Anmeldenummer: 99112495.9
(22) Anmeldetag: 01.07.1999
(51) Int. Cl.: F16H 63/38

(54) **Rastierungshülse und Schaltwelle mit darauf angeordneter Rastierungshülse**

(30) Priorität: 22.07.1998 DE 19832786
(71) Anmelder: Kochendörfer & Kiep Metallverarbeitung GmbH, 65830 Kriftel (DE)
(72) Erfinder: Dietz, Horst, 67727 Lohnsfeld (DE); Brandt, Horst, Dr., 64331 Weiterstadt (DE)
(74) Vertreter: KEIL & SCHAAFHAUSEN

(57) **Zusammenfassung**

Es wird eine Rastierungshülse (1) zur Begrenzung des Schaltweges einer Getriebeschaltwelle (2) beschrieben. Die Rastierungshülse weist einen Topf (3), in dem eine Kulisse (5) zur Schaltwegbegrenzung ausgebildet sein kann, und einen sich an den Topf (3) anschließenden rohrförmigen Schaftabschnitt (4) zur Befestigung des Topfes (3) auf der Schaltwelle (2) auf. Der Topf (3) und der Schaftabschnitt (4) sind aus Halbschalen (1a, b) gebildet, die in einer Teilungsebene (T) miteinander verschweißt sind.

## Beschreibung

Die Erfindung betrifft eine Rastierungshülse, insbesondere zur Begrenzung des Schaltweges einer Getriebeschaltwelle, sowie eine Schaltwelle mit darauf angeordneter Rastierungshülse.

In Schaltgetrieben von Fahrzeugen wird die Schaltbewegung des Schalthebels in einem Getriebeschaltdom auf die Schaltwelle übertragen, die dann die Schaltgabeln betätigt. Auf der Schaltwelle sitzt in dem Schaltdom eine Rastierungshülse, die die Schaltbewegung der Schaltwelle begrenzt. Die Rastierungshülse ist hierbei beispielsweise durch Nieten oder Schrumpfpassung an der Schaltwelle befestigt und wird bisher mittels Tiefziehen hergestellt. Nachdem aus konstruktiven Gründen jetzt sehr kleine Radien verwendet werden sollen, wird die spanlose Herstellung mittels Tiefziehen zunehmend schwieriger.

Aufgabe der Erfindung ist es daher, die Herstellung der Rastierungshülse und die Montage auf der Schaltwelle zu vereinfachen.

Diese Aufgabe wird erfindungsgemäß durch eine Rastierungshülse gelöst, die einen Topf und einen sich an den Topf anschließenden rohrförmigen Schaftabschnitt zur Befestigung des Topfes auf der Schaltwelle aufweist, wobei der Topf und der Schaftabschnitt aus Halbschalen gebildet sind, die in einer Teilungsebene miteinander verbunden, insbesondere verschweißt sind. Die zweiteilige Herstellung der Rastierungshülse ermöglicht es, die Halbschalen durch Prägen herzustellen, was die Herstellung vereinfacht. Auch wird die konstruktive Gestaltungsfreiheit erheblich erhöht, da es durch die Halbschalenherstellung möglich ist, Hinterschneidungen oder dergleichen in Axialrichtung vorzusehen.

Die Erfindung wird auch durch eine Rastierungshülse gelöst, die im wesentlichen nur aus einem Topf mit einer Mantel- und einer Bodenfläche besteht und ebenfalls durch zwei in einer Teilungsebene miteinander verbundene, insbesondere verschweißte Halbschalen gebildet wird. Auf den bei der ersten Ausführungsform vorgesehenen Schaftabschnitt wird jedoch verzichtet. Hierdurch wird die Herstellung noch weiter vereinfacht. Die Befestigung der Rastierungshülse an der Schaltwelle erfolgt über die Bodenfläche, wobei die Bodenfläche wenigstens über einen Teil ihres Umfangs mit einem an der Schaltwelle vorgesehenen Bund, Absatz oder dergleichen verschweißt wird.

Gemäß einer bevorzugten Ausgestaltung der Erfindung ist in dem Topf eine Kulisse zur Schaltwegbegrenzung ausgebildet. Hierbei durchtritt die Teilungsebene vorzugsweise die Kulisse. Da die aneinanderzufügenden Begrenzungsflächen der Halbschalen ohnehin, beispielsweise durch Laserschneiden, nachbearbeitet werden müssen, kann durch eine entsprechende Steuerung der Schneidvorrichtung ohne weiteres die Kulisse in die Halbschalen eingeschnitten werden. Hierbei ist es möglich, die Begrenzungsflächen der Kulisse derart konisch auszubilden, daß sie schräg nach innen aufeinander zulaufen. Dies hat schaltungstechnische Vorteile.

In Weiterbildung der Erfindung weist der Topf in einem Umfangsabschnitt einen sich in Axialrichtung erstreckenden Wellenabschnitt auf, über den die Schaltebene festgelegt werden kann.

In einem anderen Umfangsabschnitt weist der Topf erfindungsgemäß eine Hinterschneidung auf, über die die Wählebene festgelegt werden kann. Eine derartige Hinterschneidung ist durch das bisher verwendete Tiefziehen nicht herstellbar, sondern wäre allenfalls durch einen zusätzlichen Prägeschritt möglich gewesen.

Um eine genaue Befestigung der Rastierungshülse auf der Schaltwelle zu ermöglichen, ist in dem Schaftabschnitt ein mechanisch bearbeiteter Paßsitz ausgebildet. Die Rastierungshülse kann so auf die Schaltwelle aufgeschrumpft werden. Auf das bisher vorgesehene Nieten kann verzichtet werden.

Um der Rastierungshülse zusätzliche Stabilität zu verleihen, ist in Weiterbildung der Erfindung vorgesehen, daß die Halbschalen wenigstens im oberen Bereich des Topfes miteinander verschweißt sind. Dadurch wird ein Auseinanderbiegen des Topfabschnittes beim Schalten verhindert.

Die Erfindung erstreckt sich auch auf eine Schaltwelle mit darauf angeordneter Rastierungshülse, wobei die Rastierungshülse je nach Ausführungsform mit ihrem Schaftabschnitt auf die Schaltwelle aufgeschrumpft oder über ihre Bodenfläche mit einem an der Schaltwelle ausgebildeten Bund oder dergleichen verschweißt ist.

Weiterbildungen, Vorteile und Anwendungsmöglichkeiten der Erfindung ergeben sich auch aus der nachfolgenden Beschreibung von Ausführungsbeispielen und der Zeichnung. Dabei bilden alle beschriebenen und/oder bildlich dargestellten Merkmale für sich oder in beliebiger Kombination den Gegenstand der Erfindung, unabhängig von ihrer Zusammenfassung in den Ansprüchen oder deren Rückbeziehung.

Es zeigen:
- Fig. 1: eine schematische perspektivische Darstellung der einander zugeordneten Halbschalen der Rastierungshülse gemäß einer ersten Ausführungsform der Erfindung,
- Fig. 2: eine perspektivische Darstellung der auf der Schaltwelle montierten Rastierungshülse gemäß Fig. 1,
- Fig. 3: einen Schnitt entlang der Linie III-III in Fig. 2,
- Fig. 4: eine ähnliche Ansicht wie Fig. 1 für eine Rastierungshülse gemäß einer zweiten Ausführungsform,
- Fig. 5: eine Ansicht entsprechend Fig. 4 einer leicht abgewandelten Ausführungsform der Rastierungshülse,
- Fig. 6: eine perspektivische Darstellung der auf einer Schaltwelle montierten Rastierungshülse gemäß Fig. 4 und
- Fig. 7: einen Längsschnitt durch Fig. 6.

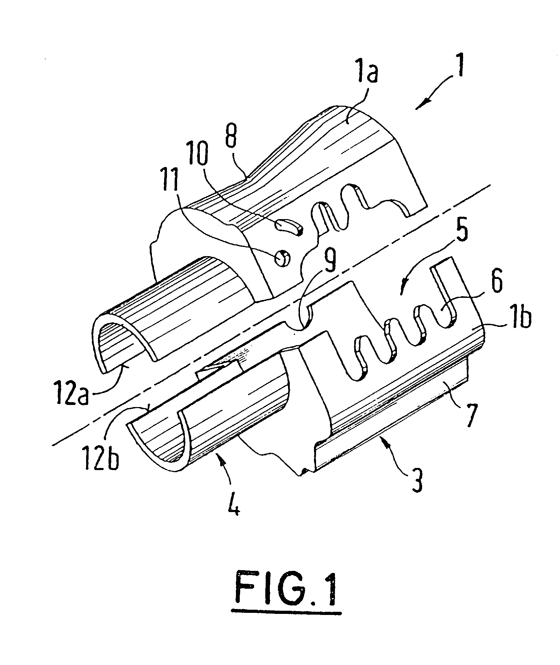

Die in den Fig. 1 bis 3 dargestellte Rastierungshülse 1 dient der Begrenzung des Schaltweges einer Schaltwelle 2, auf welcher die Rastierungshülse 1 fest angeordnet ist. Die Rastierungshülse 1 ist üblicherweise in einen hier nicht dargestellten Schaltdom eines Fahrzeuggetriebes eingesetzt.

Die Rastierungshülse 1 besteht aus zwei jeweils durch Prägen hergestellten Halbschalen 1a, 1b und weist einen Topf 3 und einen an diesen angrenzenden rohrförmigen Schaftabschnitt 4 auf.

In dem Topf 3 ist eine Kulisse 5 ausgebildet, über die die Schaltbewegung der Schaltwelle 2 begrenzt wird. Die Kulisse 5 weist Ausnehmungen 6 zur Festlegung der einzelnen Gänge der Gangschaltung auf. In einem um etwa 90° gegenüber der Kulisse 5 versetzten Umfangsabschnitt des Topfes 3 ist ein sich in Axialrichtung erstreckender Wellenabschnitt 7 ausgebildet, über den die Schaltebene festgelegt wird. In einem weiteren, ebenfalls um ca. 90° gegenüber der Kulisse 5 versetzten Umfangsabschnitt der Rastierungshülse 1 ist eine Hinterschneidung 8 zur Festlegung der Wählebene (Rückwärtsgang) ausgebildet. Hierzu kann die Hinterschneidung 8 mit einer nicht dargestellten, gehäusefest gelagerten Kugelraste zusammenwirken. Auf der der Kulisse 5 gegenüberliegenden Seite des Topfes 3 ist eine Bohrung 9 ausgebildet, in die zur Festlegung der Schaltwelle 2 ein nicht dargestellter Bolzen eingreifen kann, beispielsweise um verschiedene Einstellvorgänge am Getriebe durchzuführen. Schließlich sind in dem Topf 3 in der Nähe der Kulisse 5 Befestigungsbohrungen 10, 11 ausgebildet, an denen ein Sicherungsblech oder dergleichen angebracht werden kann, um ein versehentliches Umschalten aus einem hohen Vorwärtsgang in den Rückwärtsgang zu verhindern.

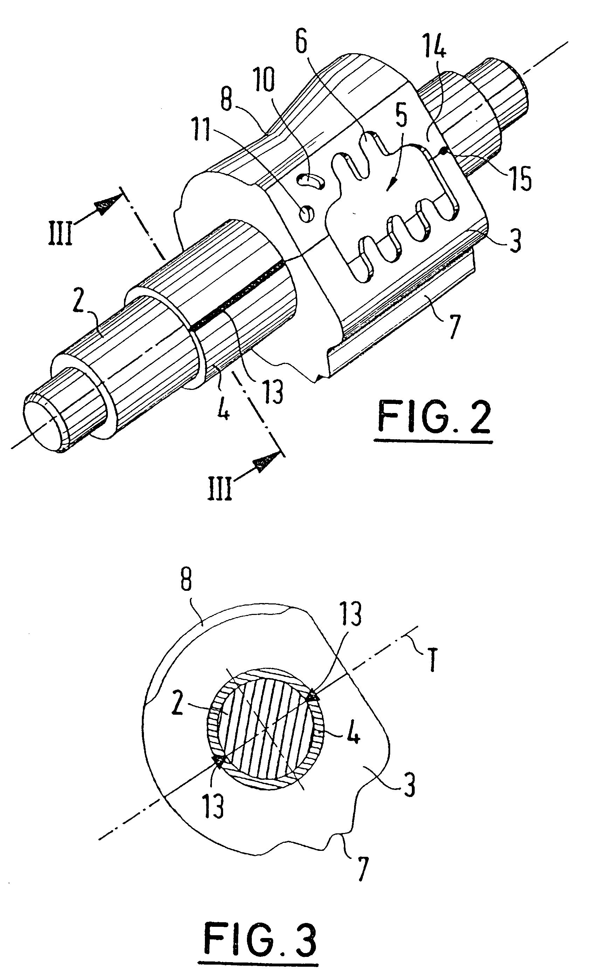

Die Teilungsebene T (vgl. Fig. 3) der Rastierungshülse 1 verläuft durch die Kulisse 5 und die Bohrung 9. Da die Kanten 12a, b der Halbschalen 1a, b beispielsweise durch Laserschneiden für die Schweißverbindung 13 vorbereitet werden müssen, kann durch entsprechende Führung des Schneidwerkzeugs mit der Kantenbearbeitung gleichzeitig die Kulisse 5 bzw. die Bohrung 9 in die Kanten 12a, b eingeschnitten werden. Die Kanten 12a, b sind insbesondere im Bereich der Kulisse 5 derart konisch ausgebildet, daß sie nach innen leicht aufeinander zulaufen, was schaltungstechnische Vorteile bietet.

Die Halbschalen 1a, b können nach dem Prägen und Bearbeiten der Kanten 12a, b durch Schweißen, insbesondere Laser- oder Elektronenstrahlschweißen mindestens im Bereich des Schaftabschnittes 4 miteinander verbunden werden. Zusätzlich ist im oberen Bereich 14 des Topfes 3 ein weiterer Schweißverbindungspunkt oder -bereich 15 vorgesehen, um ein Aufbiegen der Rastierungshülse beim Schalten zu verhindern. Auf der Innenseite des Schaftabschnittes 4 wird dann durch einen mechanischen Bearbeitungsschritt, beispielsweise Bohren oder Drehen, ein Paßsitz hergestellt. Die Rastierungshülse kann dann auf die Schaltwelle 2 aufgeschrumpft werden.

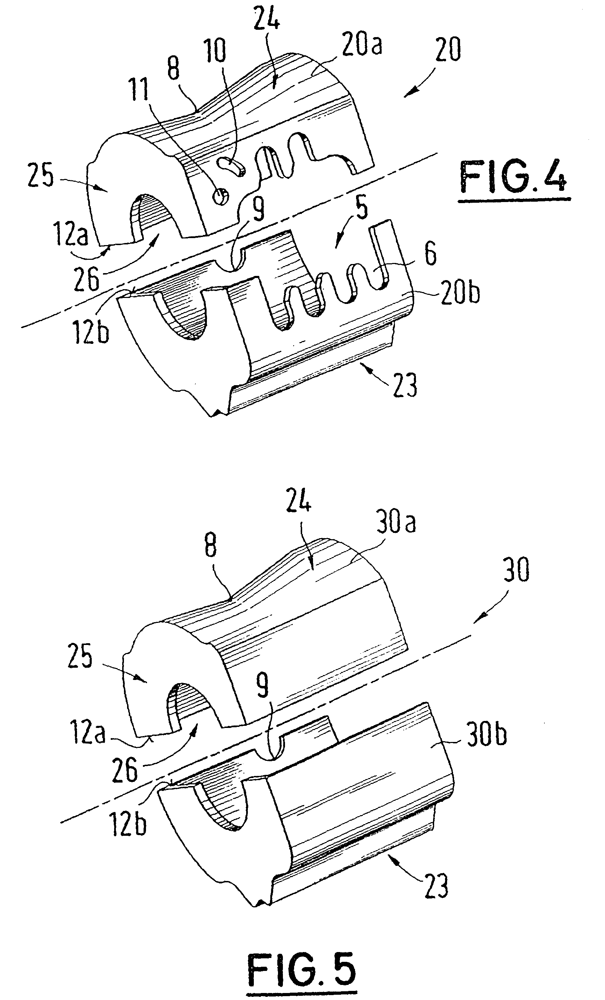

In den Fig. 4 bis 7 sind weitere Ausführungsformen der Erfindung dargestellt. Der Einfachheit halber werden bei diesen Ausführungsformen für Elemente, die denen der ersten Ausführungsform entsprechen, gleiche Bezugszeichen verwendet und auf ihre erneute detaillierte Beschreibung verzichtet.

Die Rastierungshülse 20 ist ähnlich aufgebaut wie die Rastierungshülse 1 gemäß der ersten Ausführungsform und besteht aus zwei Halbschalen 20a, b. Im Gegensatz zu der Rastierungshülse 1 gemäß der ersten Ausführungsform weist die Rastierungshülse 20 keinen Schaftabschnitt auf, sondern besteht allein aus dem Topf 23, der eine Mantelfläche 24 und eine Bodenfläche 25 aufweist. In der Bodenfläche 25 ist eine Ausnehmung 26 zur Aufnahme der Schaltwelle 22 ausgebildet.

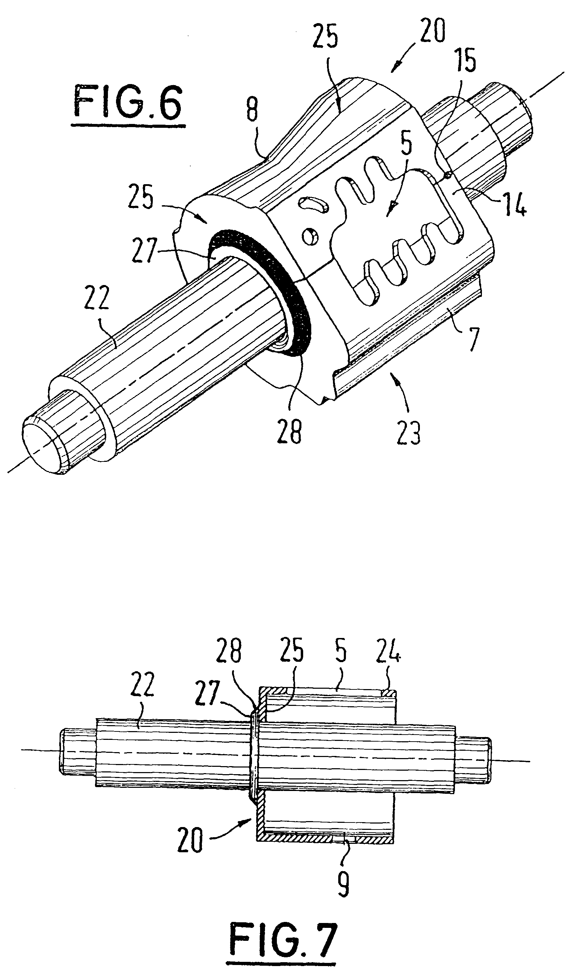

Wie sich aus den Fig. 6 und 7 ergibt, ist an der Schaltwelle 22 ein Bund 27, Absatz oder dergleichen angeordnet, an welchem die Bodenfläche 25 der Rastierungshülse 20 anliegt. Hierdurch wird eine exakte Positionierung der Rastierungshülse 20 auf der Schaltwelle 22 vereinfacht. Eine zuverlässige Verbindung zwischen Rastierungshülse 20 und Schaltwelle 22 wird durch eine vorzugsweise umlaufende Schweißnaht 28 erreicht, mit welcher die Rastierungshülse 20 mit dem Bund 27 der Schaltwelle 22 verschweißt wird. Um eine noch zuverlässigere Verbindung der beiden Halbschalen 20a, b zu erreichen und ein Aufbiegen der Rastierungshülse 20 während des Schaltens zu verhindern, können die Halbschalen 20a, b auch entlang der Teilungsebene T insbesondere im oberen Topfbereich 14 verschweißt sein. Die Verbindung erfolgt vorzugsweise mittels Laser- oder Elektronenstrahlschweißen. Im übrigen entspricht die Rastierungshülse 20 der Rastierungshülse 1. Durch den Verzicht auf den Schaftabschnitt 4 wird die Herstellung der Rastierungshülse 20 weiter vereinfacht, wobei durch das Anfügen der Rastierungshülse 20 an den Bund 27 der Schaltwelle 22 eine zuverlässige Verbindung zwischen Schaltwelle 22 und Rastierungshülse 20 erreicht wird. Auf die mechanische Nachbearbeitung der Innenfläche des Schaftabschnitts 4 zur Herstellung eines Paßsitzes kann verzichtet werden, da das Aufschrumpfen des Schaftabschnitts 4 auf die Schaltwelle entfällt.

In Fig. 5 ist eine von der zweiten Ausführungsform geringfügig abgewandelte Ausführungsform einer Rastierungshülse 30 dargestellt, die im Gegensatz zu der Rastierungshülse 20 keine Kulisse und keine Befestigungsbohrung für Sicherungsbleche aufweist. Im übrigen erfolgt die Verbindung der Halbschalen 30a, b miteinander und mit der Schaltwelle ebenso wie bei der Rastierungshülse 20 gemäß der zweiten Ausführungsform. Auf die Kulisse 5 und die Befestigungsbohrungen 10, 11 kann selbstverständlich auch bei der Rastierungshülse 1 gemäß der ersten Ausführungsform verzichtet werden.

Die erfindungsgemäße Rastierungshülse 1; 20; 30 kann einfach hergestellt und zuverlässig mit der Schaltwelle 2 verbunden werden. Die zweiteilige Ausführung als Halbschalen 1a, b; 20a, b; 30a, b erlaubt weitgehende konstruktive Gestaltungsmöglichkeiten.

### Bezugszeichenliste:

- 1: Rastierungshülse
- 1a, b: Halbschale
- 2: Schaltwelle
- 3: Topf
- 4: Schaftabschnitt
- 5: Kulisse
- 6: Ausnehmung
- 7: Wellenabschnitt
- 8: Hinterschneidung
- 9: Bohrung
- 10: Befestigungsbohrung
- 11: Befestigungsbohrung
- 12a, b: Halbschalenkante
- 13: Schweißnaht
- 14: oberer Topfbereich
- 15: Schweißverbindung
- 20: Rastierungshülse
- 20a, b: Halbschalen
- 22: Schaltwelle
- 23: Topf
- 24: Mantelfläche
- 25: Bodenfläche
- 26: Ausnehmung
- 27: Bund
- 28: Schweißnaht
- 30: Rastierungshülse
- 30a, b: Halbschalen
- T: Teilungsebene

## Patentansprüche

1. Rastierungshülse (1), insbesondere zur Begrenzung des Schaltweges einer Getriebeschaltwelle (2), mit einem Topf (3) und mit einem sich an den Topf (3) anschließenden rohrförmigen Schaftabschnitt (4) zur Befestigung des Topfes (3) auf der Schaltwelle (2), wobei der Topf (3) und der Schaftabschnitt (4) aus Halbschalen (1a, b) gebildet sind, die in einer Teilungsebene (T) miteinander verbunden, insbesondere verschweißt sind.

2. Rastierungshülse (20, 30), insbesondere zur Begrenzung des Schaltweges einer Getriebeschaltwelle (22), bestehend aus einem Topf (23) mit einer Mantelfläche (24) und eine Bodenfläche (25) zur Verbindung mit der Schaltwelle (22), wobei der Topf (23) aus Halbschalen (20a, b; 30a, b) gebildet ist, die in einer Teilungsebene (T) miteinander verbunden, insbesondere verschweißt sind.

3. Rastierungshülse nach Anspruch 1 oder 2, **dadurch gekennzeichnet**, daß in dem Topf (3) eine Kulisse (5) zur Schaltwegbegrenzung ausgebildet ist und daß die Teilungsebene (T) die Kulisse (5) durchtritt.

4. Rastierungshülse nach einem der Ansprüche 1 bis 3, **dadurch gekennzeichnet**, daß die Kulisse (5) insbesondere mittels Laserschnitt in die Halbschalen (1a, b; 20a, b) des Topfes (3; 23) eingeschnitten ist.

5. Rastierungshülse nach einem der Ansprüche 1 bis 4, **dadurch gekennzeichnet**, daß die Begrenzungskanten (12a, b) der Halbschalen (1a, b; 20a, b) wenigstens im Bereich der Kulisse (5) leicht konisch ausgebildet sind.

6. Rastierungshülse nach einem der Ansprüche 1 bis 5, **dadurch gekennzeichnet**, daß die Halbschalen (1a, b; 20a, b; 30a, b) durch Prägen hergestellt sind.

7. Rastierungshülse nach einem der Ansprüche 1 bis 6, **dadurch gekennzeichnet**, daß der Topf (3; 23) in einem Umfangsabschnitt einen sich in Axialrichtung erstreckenden Wellenabschnitt (7) aufweist.

8. Rastierungshülse nach einem der Ansprüche 1 bis 7, **dadurch gekennzeichnet**, daß der Topf (3; 23) in einem Umfangsabschnitt eine Hinterschneidung (8) aufweist.

9. Rastierungshülse nach einem der Ansprüche 1 und 3 bis 8, **dadurch gekennzeichnet**, daß in dem Schaftabschnitt (4) ein Paßsitz zur Montage auf der Schaltwelle (2) ausgebildet ist.

10. Rastierungshülse nach einem der Ansprüche 1 bis 9, **dadurch gekennzeichnet**, daß die Halbschalen (1a, b; 20a, b; 30a, b) im oberen Bereich (14) des Topfes (3; 23) miteinander verschweißt sind.

11. Schaltwelle (2) oder dergleichen mit einer darauf angeordneten Rastierungshülse (1) nach einem der Ansprüche 1 und 3 bis 10, **dadurch gekennzeichnet**, daß der Schaftabschnitt (4) auf die Schaltwelle (2) oder dergleichen aufgeschrumpft ist.

12. Schaltwelle (22) oder dergleichen mit einer darauf angeordneten Rastierungshülse (20; 30) nach einem der Ansprüche 2 bis 10, **dadurch gekennzeichnet**, daß an der Schaltwelle (22) ein Bund (27), Absatz oder dergleichen ausgebildet ist und daß die Bodenfläche (25) des Topfes (23) der Rastierungshülse (20; 30) wenigstens über einen Teil ihres Umfangs mit dem Bund (27) verschweißt ist.
